# EUROPEAN PATENT SPECIFICATION

(11) **EP 2 357 628 B1**
(45) Date of publication and mention of the grant of the patent: **14.05.2014**
(21) Application number: 09827609.0
(22) Date of filing: 16.11.2009
(51) Int. Cl.: G08G 1/16, G08B 21/02, G08B 25/04, G08B 25/10, G08G 1/005, H04W 4/02, H04W 64/00, H04W 84/10, H04W 92/08

(54) **PORTABLE COMMUNICATION TERMINAL, BASE STATION, AND METHOD FOR CONTROLLING PORTABLE COMMUNICATION TERMINAL**
TRAGBARES KOMMUNIKATIONSENDGERÄT, BASISSTATION UND VERFAHREN ZUR STEUERUNG DES TRAGBAREN KOMMUNIKATIONSENDGERÄTES
TERMINAL DE COMMUNICATION PORTABLE, STATION DE BASE ET PROCÉDÉ POUR COMMANDER LE TERMINAL DE COMMUNICATION PORTABLE

(30) Priority: 21.11.2008 JP 2008297699
(43) Date of publication of application: 17.08.2011
(73) Proprietor: NEC Corporation, Minato-ku Tokyo 108-8001 (JP)
(72) Inventor: TETSUHASHI, Hideaki, Tokyo 108-8001 (JP); MURAKAMI, Takuya, Tokyo 108-8001 (JP); OKUYAMA, Yoshiaki, Tokyo 108-8001 (JP)
(74) Representative: Vossius & Partner
(86) International application number: PCT/JP2009/069671
(87) International publication number: WO 2010/058828

(56) References cited:
- EP-A1- 2 189 959
- DE-A1- 3 932 029
- DE-A1-102008 030 550
- JP-A- 2001 116 564
- JP-A- 2002 074 593
- JP-A- 2002 123 896
- JP-A- 2002 243 460
- JP-A- 2002 288 785
- JP-A- 2005 071 383
- JP-A- 2006 163 589
- JP-A- 2008 066 805
- JP-A- 2008 187 225

## Description

This invention relates to a mobile terminal, a base station, a warning system and a method for controlling the mobile communication terminal which are able to receive a predetermined wireless signal.

A mobile communication terminal, which changes an operation mode at a time when the mobile communication terminal enters into a specific area, is disclosed in JP-A-1999-018137 (Patent document 1).

Moreover, a mobile communication terminal, which receives an entrance restricting signal from a base station and outputs an entrance restricting warning sound when the mobile terminal communication terminal enters into a wireless zone where entrance is restricted and then, requests position registration, is disclosed in JP-A-1995-038959 (Patent document 2).

Moreover, a mobile terminal apparatus, which warns a user's mobile communication terminal that a car approaches, is disclosed in JP-A- 2006-331154 (Patent document 3).

JP-2008-066805 A discloses a mobile communication system which requires a special radio base station in the building's doorway. When the mobile communication terminal receives a signal from a predetermined transmission-free area, the warning signal transmitter transmits a warning signal to the outside of the mobile communication terminal according to a judgment result of the transmission-free area judgment device. The transmission-free area judgment device identifies whether or not the mobile communication terminal exists in the transmission-free area according to the reception level of a control signal transmission from the control signal communicator. Furthermore, the transmission-free area is limited to a small area. According to three examples, the transmission-free area is set in a building, in a car or on a bridge body portion of a pedestrian bridge. According to this known system, the information signal of the wireless LAN base station may be used for identifying whether or not it is in the transmission-free area. Furthermore, the transmission-free area is a small micro-area. Therefore, if this small transmission-free area were replaced with a substantially greater dangerous area, the user of the mobile communication terminal would be exposed to the danger at the moment when the user enters the dangerous area and after the user determines the dangerous area.

The object of the system described in the Patent document 1 is to use the mobile communication terminal comfortably through changing the operation mode automatically. For this reason, there is no description on prevention of a traffic accident in the Patent document 1.

Moreover, according to the system described in the patent document 2, the mobile communication terminal issues the warning which indicates that entrance is restricted in the case that the mobile communication terminal enters into the wireless zone where entrance is restricted. For this reason, according to the invention described in the Patent document 2, there is no means to warn user that the mobile communication terminal enters into a dangerous area such as an area where traffic accidents occur frequently.

Moreover, according to the system described in the Patent document 3, the car has a signal sender to send a signal to the mobile communication terminal. According to the invention, the mobile communication terminal further includes a level judger which judges level of a received signal and a warning issuer which issues a warning when it is judged that the level of the received signal exceeds a predetermined level. According to the invention, when the level of the signal which is sent from the car is not lower than the predetermined level, the warning is issued to user of the mobile communication terminal.

For this reason, for example, even when user walks on a road where is safe relatively since the road is separated from a roadway by a guardrail, the warning is issued. As mentioned above, according to the system described in the Patent document 3, the warning is issued to user not through judging whether user exists in a relatively safe area or in a dangerous area where traffic accidents occur frequently. Accordingly, the warning may be issued to user, who is in the relatively safe area, in some cases. In this case, a bad influence that user thinks that the received warning is unnecessary and consequently, user does not pay attention any longer to walking on the road may be caused.

An object of the present invention is to solve the problem mentioned above through providing a mobile communication terminal, a base station, a warning system and a method for controlling the mobile communication terminal which are able to inform user of a situation corresponding to a predetermined area when user exists in the predetermined area. This object is achieved with the features of the claims.

According to the present invention, it is possible to receive the predetermined wireless signal in the predetermined area. Consequently, it is possible to inform user of situation corresponding to the predetermined area, in the case that the predetermined wireless signal is received.

### BRIEF DESCRIPTION OF THE DRAWINGS

FIG. 1 is an explanatory diagram showing a state of using a mobile communication terminal according to a first exemplary embodiment.
FIG. 2 is a flowchart showing an operation of the mobile communication terminal.
FIG. 3 is an explanatory diagram showing a state of using-a mobile communication terminal according to a second exemplary embodiment.
FIG. 4 is a flowchart showing an operation of the mobile communication terminal.
FIG. 5 is an explanatory diagram showing a state of using a base station according to a third exemplary embodiment.
FIG. 6 is a flowchart showing an operation of the base station.
FIG. 7 is an explanatory diagram showing a state of using a base station according to a fourth exemplary embodiment.
FIG. 8 is a flowchart showing an operation of the base station.
FIG. 9 is an explanatory diagram showing relation among a base station, a communication area and a mobile communication terminal in a warning system according to a fifth exemplary embodiment.
FIG. 10 is an explanatory diagram showing a beacon receiving state and an operation of the mobile communication terminal in the warning system.
FIG. 11 is a block diagram showing a part of configuration of the mobile communication terminal.
FIG. 12 is a flowchart showing an operation of the mobile communication terminal.
FIG. 13 is a flowchart showing a detailed operation of a mode control of the mobile communication terminal.
FIG. 14 is a diagram showing a beacon which is sent from an in-car device according to a sixth exemplary embodiment.

### DESCRIPTION OF CODES

- 101, 201 and 501: Mobile communication terminal
- 102 and 102A: Setter
- 103: Informer
- 104, 105, A100 and B100: Communication area
- 106, 203, A and B: Base station
- 107 and 502: Car
- 202: Receiver
- 204, A1, B1 and B2: Dangerous area
- 301 and 301A: Sender
- 502A and 502B: Beacon
- 510 and 511: Configuration
- 512: First data storage
- 513: Second data storage
- 514: First antenna unit
- 515: Second antenna unit
- 516: Antenna controlling unit
- 517: Computer
- 530 and 531: Operation
- 601: In-car device
- 602: Detector
- AA and BB: RSCP
- A10, B10 and B20: Dangerous area information
- PA, PB1, PB2 and PB3: Point

### BEST MODE FOR CARRYING OUT THE INVENTION

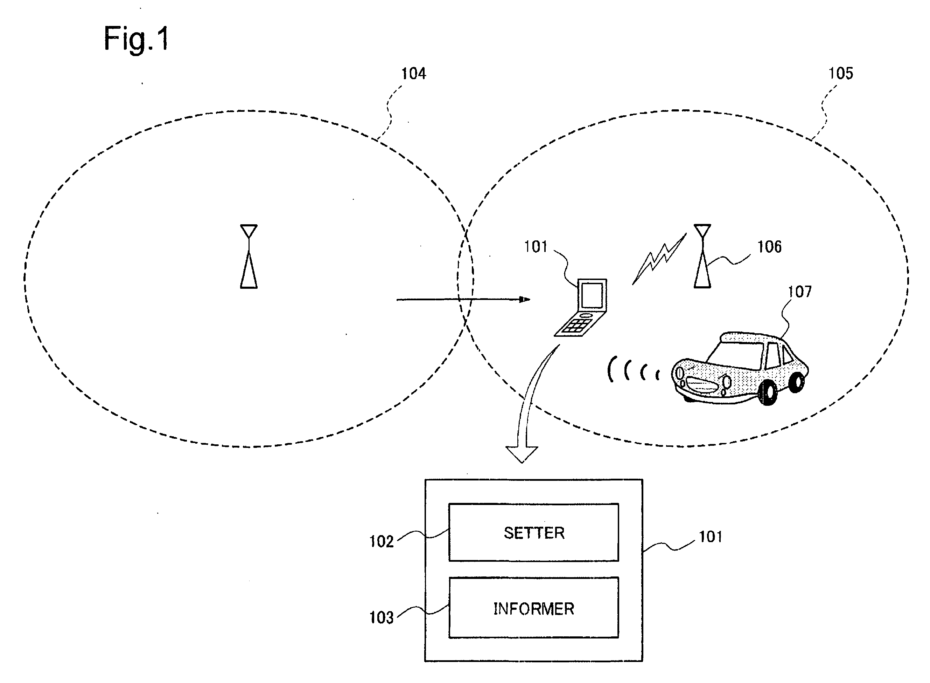

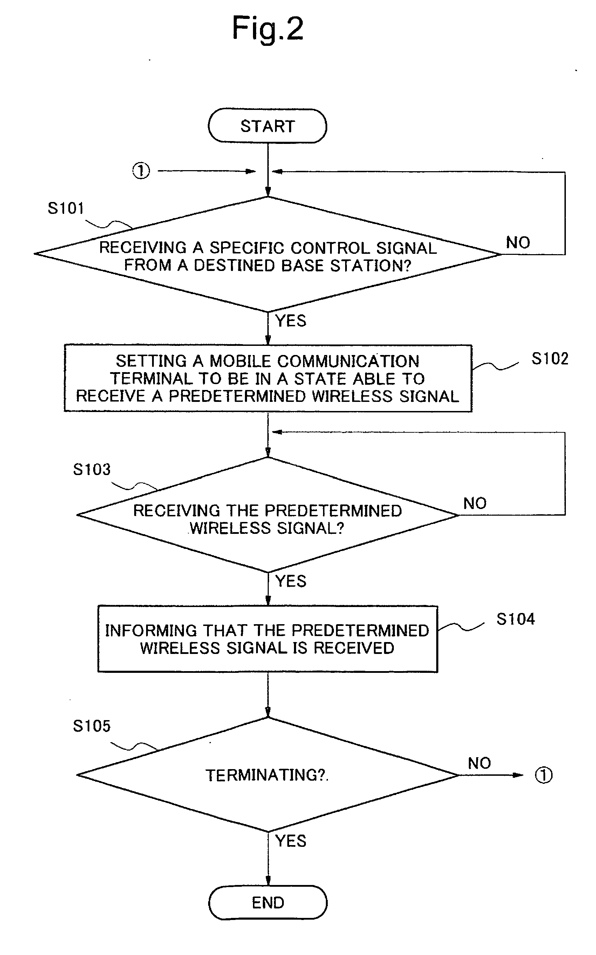

A first exemplary embodiment according to the present invention will be described in the following with reference to FIG. 1 and FIG. 2.

FIG. 1 is an explanatory diagram showing a state of using a mobile communication terminal according to the first exemplary embodiment. FIG. 2 is a flowchart showing an operation of the mobile communication terminal.

A mobile communication terminal 101 shown in FIG. 1 includes a setter 102 and an informer 103. The mobile communication terminal 101 may move in some cases from a communication area 104 to a communication area 105 as user of the mobile communication terminal 101 moves. In the case that the mobile communication terminal 101 moves into the predetermined communication area 105 and receives a specific control signal from a destined base station 106, the setter 102 sets the mobile communication terminal 101 to be in a state able to receive a predetermined wireless signal. In the case that the mobile communication terminal 101 receives the predetermined wireless signal in the state able to receive the predetermined wireless signal, the informer 103 informs user of the own mobile communication terminal 101 that the predetermined wireless signal is received.

The mobile communication terminal 101 mentioned above operates on the basis of a flowchart shown in FIG. 2.

First, in Step 101 (hereinafter, "Step" is abbreviated as "S"), a control unit of the mobile communication terminal 101, which is not shown in the figure, judges whether the mobile communication terminal 101 receives the specific control signal from the destined base station 106. In the case that the specific control signal is not received (NO in S101) since the mobile communication terminal 101 stays in the communication area 104, control in S101 is repeated. On the other hand, in the case that the mobile communication terminal 101 moves into the communication area 105 as user of the mobile communication terminal 101 moves, and the mobile communication terminal 101 receives the specific control signal (YES in S101), the setter 102 sets the mobile communication terminal 101 to be in the state able to receive the predetermined wireless signal (S102),

Next, the control unit judges in S103 whether the predetermined wireless signal is received. In the case that the control unit judges that the predetermined wireless signal is received (YES in S103), the informer 103 informs user of the own mobile communication terminal 101 that the wireless signal is received (S104). Then, the control unit judges in S105 whether the operation terminates. In the case that the operation does not terminate (NO in S105), the operation transits to S101.

As mentioned above, it is possible to inform user of the situation corresponding to the predetermined area by use of the mobile communication terminal 101, in the case that the predetermined wireless signal is received in the predetermined area (communication area 105). For this reason, user can take action corresponding to the informed situation.

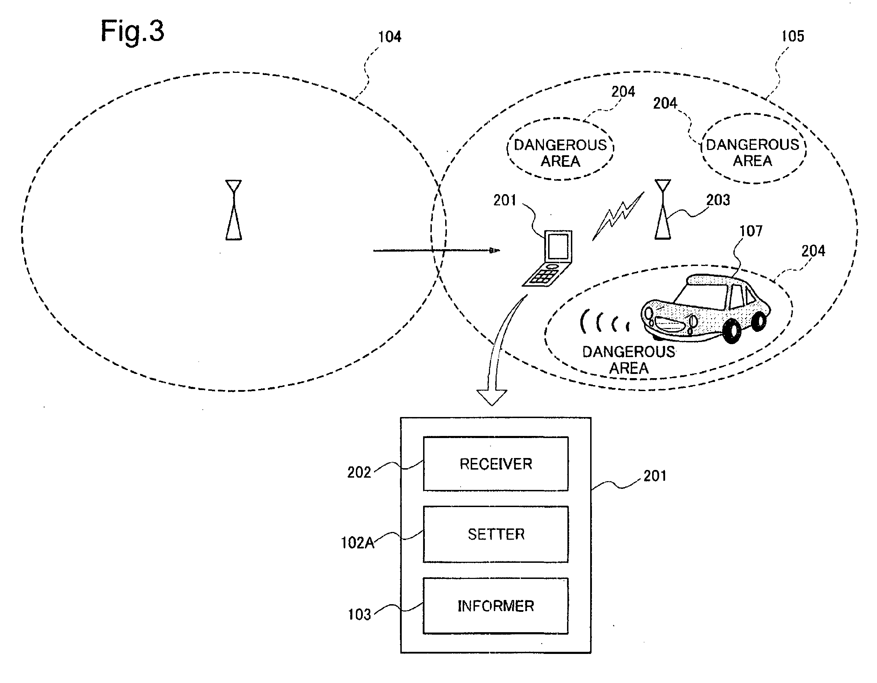

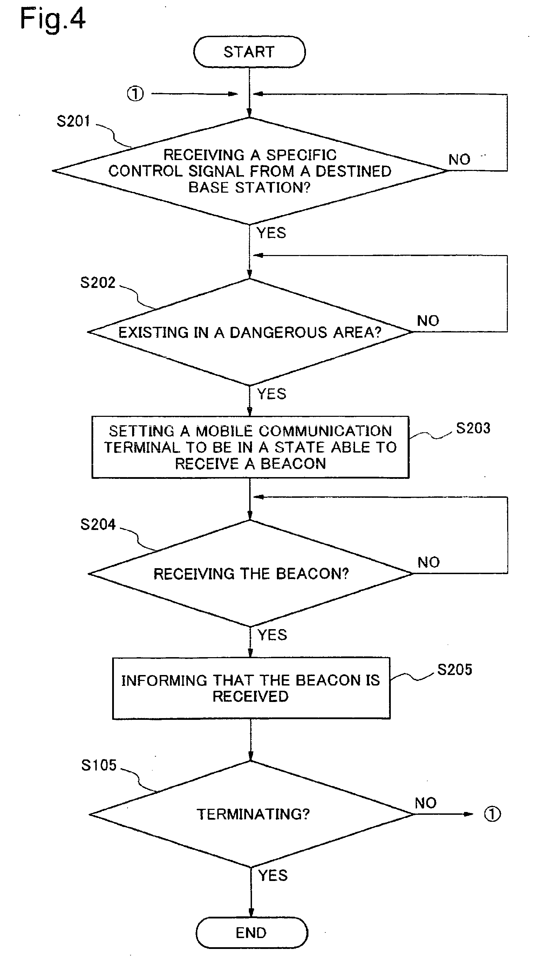

A second exemplary embodiment according to the present invention will be described in the following with reference to FIG. 3 and FIG. 4.

FIG. 3 is an explanatory diagram showing a state of using a mobile communication terminal according to a second exemplary embodiment. FIG. 4 is a flowchart showing an operation of the mobile communication terminal. Further, the same configuration and the same operational step as ones according to the first exemplary embodiment have the same codes as ones according to the first exemplary embodiment.

A mobile communication terminal 201 shown in FIG. 3 includes a receiver 202, a setter 102A and the informer 103. The mobile communication terminal 201 may move in some cases from the communication area 104, with which any dangerous area is not registered, to the communication area 105 with which a dangerous area 204 is registered, as user of the mobile communication terminal 201 moves. In the case that the mobile communication terminal 201 moves from the communication area 104 to the communication area 105, the receiver 202 receives a specific control signal, which includes information on the dangerous area 204, from a base station 203. When the mobile communication terminal 201 moves into the dangerous area 204, the setter 102A sets the own mobile communication terminal 201 to be in a state able to receive a predetermined wireless signal. The predetermined wireless signal is, according to the invention, a radio beacon signal which is sent from an in-car device mounted in a car 107. Hereinafter, the radio beacon signal is abbreviated as a beacon.

Informing by the informer 103 is carried out by use of any one or any combination of, for example, a warning sound, indication of a character or a mark, lighting or blinking of a lamp and vibration. Moreover, the mobile communication terminal 101 is, for example, a cellular phone, PHS (Personal Handy-phone System), PDA (Personal Digital Assistants) or the like.

Moreover, the dangerous area 204 is an area where traffic accidents occur frequently and an area where traffic accident is expected. The area where traffic accident is expected is an area where there is no sidewalk separated by a guardrail and then, a person and a car come and go on the same road, and an area where there is a crossing of a relatively narrow road with no signal.

The mobile communication terminal 201 mentioned above operates on the basis of a flowchart shown in FIG. 4.

First, in Step 201, a control unit of the mobile communication terminal 201, which is not shown in the figure, judges whether the receiver 202 receives the specific control signal from the destined base station 203. In the case that the receiver 202 does not receive the specific control signal (NO in S201) since the mobile communication terminal 201 stays in the communication area 104, the control unit repeats S201. On the other hand, in the case that the mobile communication terminal 201 moves into the communication area 105, with which the dangerous area 204 is registered, as user of the mobile communication terminal 201 moves, and the mobile communication terminal 201 receives the specific control signal (YES in 5201), the operation transits to control in S202.

Next, the control unit of the mobile communication terminal 201 judges whether the own mobile communication terminal 201 exists in the dangerous area 204 by comparing a current position of the mobile communication terminal 201 with a position of the dangerous area 204. In the case that user moves and then, the mobile communication terminal 201 moves into the dangerous area 204 (YES in S202), the setter 102A sets the own mobile communication terminal 201 to be in the state able to receive the beacon (S203). Next, the control unit judges whether the beacon is received in S204. In the case that the control unit judges that the receiver 202 receives the beacon (YES in S204), the informer 103 informs user of the own mobile communication terminal 201 that the receiver 202 receives the beacon (S205). Next, the control unit judges in S105 whether the operation terminates. In the case that the operation does not terminate (NO in S105), the operation transits to S201.

By use of the mobile communication terminal 201, it is possible to warn user that the car 107 approaches the dangerous area 204, as mentioned above.

Only when the mobile communication terminal 201 moves into the dangerous area 204 of the communication area 105, the mobile communication terminal 201 is set to be in the state able to receive the beacon, according to the second exemplary embodiment. According to the above mention, a case to inform user is limited to the case that the car approaches in the dangerous area. For this reason, it is possible to inform user more appropriately that the car approaches.

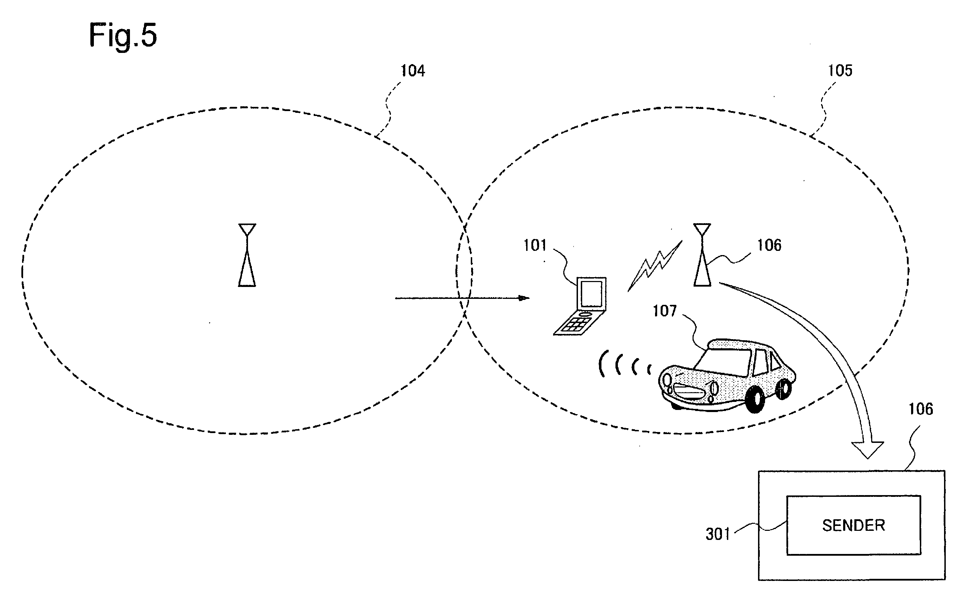

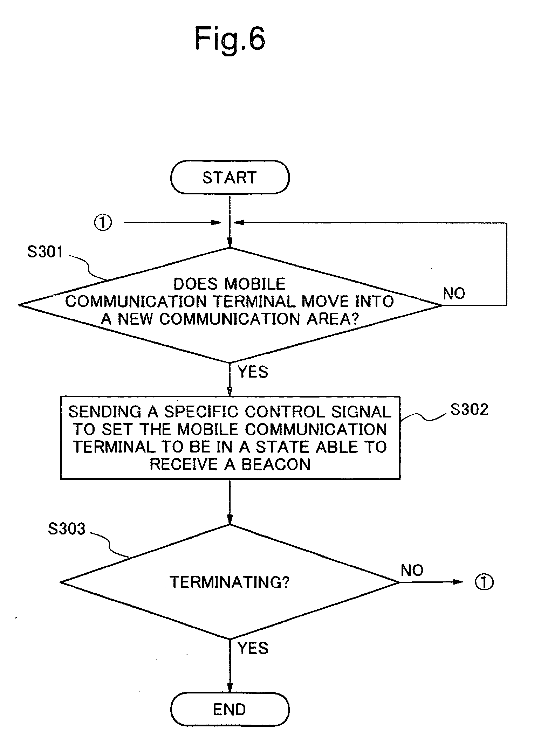

A third exemplary embodiment according to the present invention will be described in the following with reference to FIG. 5 and FIG. 6.

FIG. 5 is an explanatory diagram showing a state of using a base station according to the third exemplary embodiment. FIG. 6 is a flowchart showing an operation of the base station. Further, the same configuration as one according to the first or the second exemplary embodiment has the same code as one according to the first or the second exemplary embodiment.

The base station 106 shown in FIG. 5 includes a sender 301. In the case that the mobile communication terminal 101 moves newly into the communication area 105 with which a dangerous area is registered, the sender 301 sends a specific control signal which sets the mobile communication terminal 101 to be in a state able to receive a beacon.

The base station 106 mentioned above operates on the basis of a flowchart shown in FIG. 6.

Firstly, a control unit of the base station 106. which is not shown in the figure, judges in S301 whether the mobile communication terminal 101 moves into the communication area 105, with which the dangerous area is registered, from the communication area 104. The judgment is carried out by checking whether a position of the mobile communication terminal 101 is registered with the own base station 106.

In the case that the control unit, which is not shown in the figure, judges that the mobile communication terminal 101 moves into the communication area 105 (YES in S301), the sender 301 sends a specific control signal which sets the mobile communication terminal 101 to be in the state able to receive the beacon (S302). Next, the control unit judges in S303 whether the operation terminates. In the case that the operation does not terminate (NO in S303), the operation transits to S301.

The base station 106, which works as mentioned above, can control the mobile communication terminal 101, which moves into the communication area 105 where the dangerous area is registered, to be in the state able to receive the beacon. As a result, it is possible to inform user, who holds the mobile communication terminal 101, of being in imminent danger by sending the beacon to user. For this reason, user can take action for evading the danger.

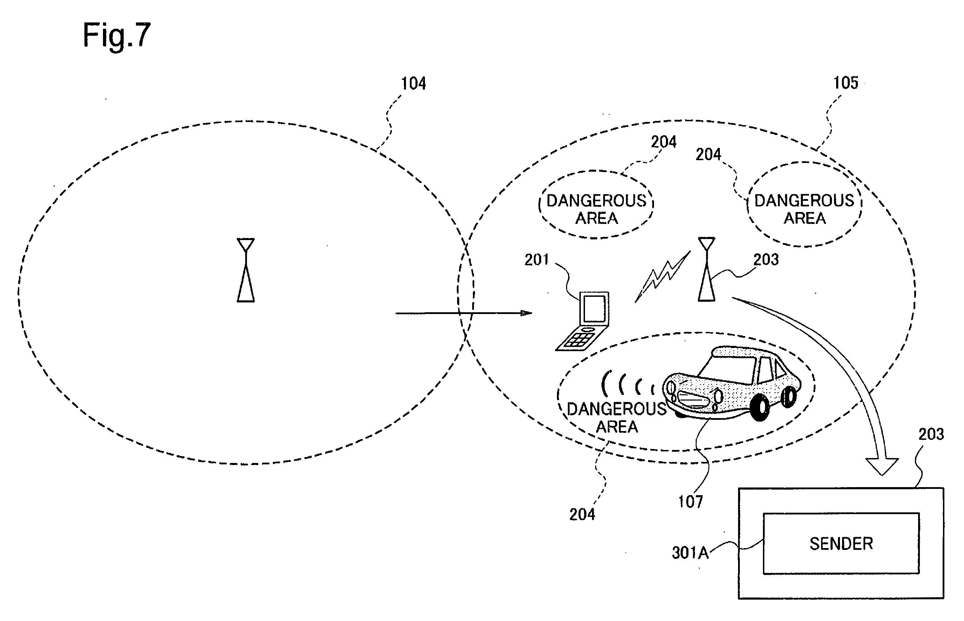

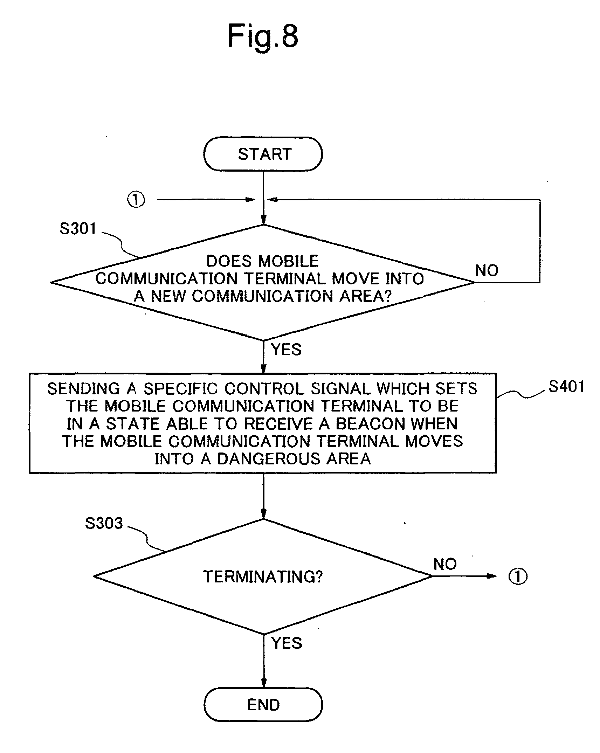

Next, a fourth exemplary embodiment will be described with reference to FIG. 7 and FIG. 8.

FIG. 7 is an explanatory diagram showing a state of using a base station according to a fourth exemplary embodiment and FIG. 8 is a flowchart showing an operation of the base station. Further, the same configuration and the same operational step as ones described in the first to the third exemplary embodiments have the same codes respectively as ones of the first to the third exemplary embodiments.

The base station 203 in FIG. 7 includes a sender 301A. In some cases, the mobile communication terminal 201 may move into the communication area 105, with which the dangerous area 204 is registered, as user moves. In the case that the mobile communication terminal 201 moves into the communication area 105 newly, the sender 301A sends a control signal for setting the communication terminal 201 to be in a state able to receive a beacon when the mobile communication terminal 201 moves into the dangerous area 204.

The base station 203 mentioned above operates on the basis of a flowchart shown in FIG. 8.

The base station 203 judges firstly in S301 whether the mobile communication terminal 101 moves from the communication area 104 into the communication area 105, with which a dangerous area is registered, as user moves. The base station 203 carries out the judgment by checking whether a position of the own mobile communication terminal 201 is registered with the base station 203.

In the case that a control unit, which is not shown in the figure, judges that the mobile communication terminal 201 moves into the communication area 105 (YES in S301) as user moves, the sender 301A sends a specific control signal (S401). In the case that the mobile communication terminal 201, which receives the control signal, moves into the dangerous area 204 as user moves, the mobile communication terminal 201 is set to be in the state able to receive the beacon. Next, the control unit judges in S303 whether the operation terminates. In the case that the operation does not terminate (NO in S303), the operation transits to S301.

The base station 203, which works as mentioned above, sends the specific control signal to the mobile communication terminal 201 which moves into the communication area 105 with which the dangerous area is registered. The mobile communication terminal 201, which receives the control signal, is set to be in the state able to receive the beacon, when the mobile communication terminal 201 further moves into the dangerous area 204. As a result, it is possible for the mobile communication terminal 201 to inform user of being in imminent danger in the dangerous area 204 by receiving the beacon. For this reason, user can take action for evading the danger.

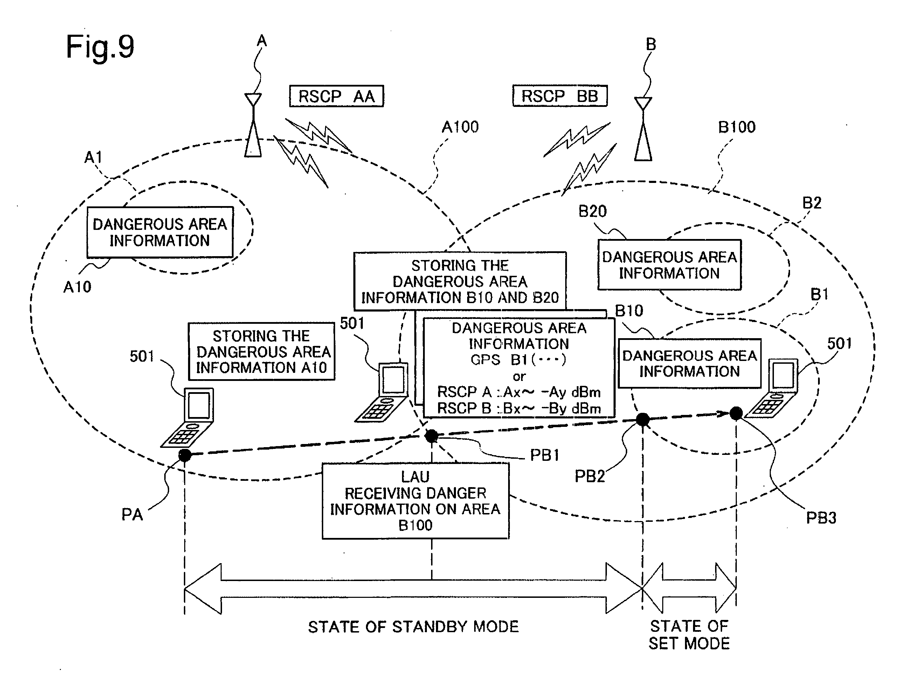

Next, a fifth exemplary embodiment will be described with reference to FIGs. 9 to 13.

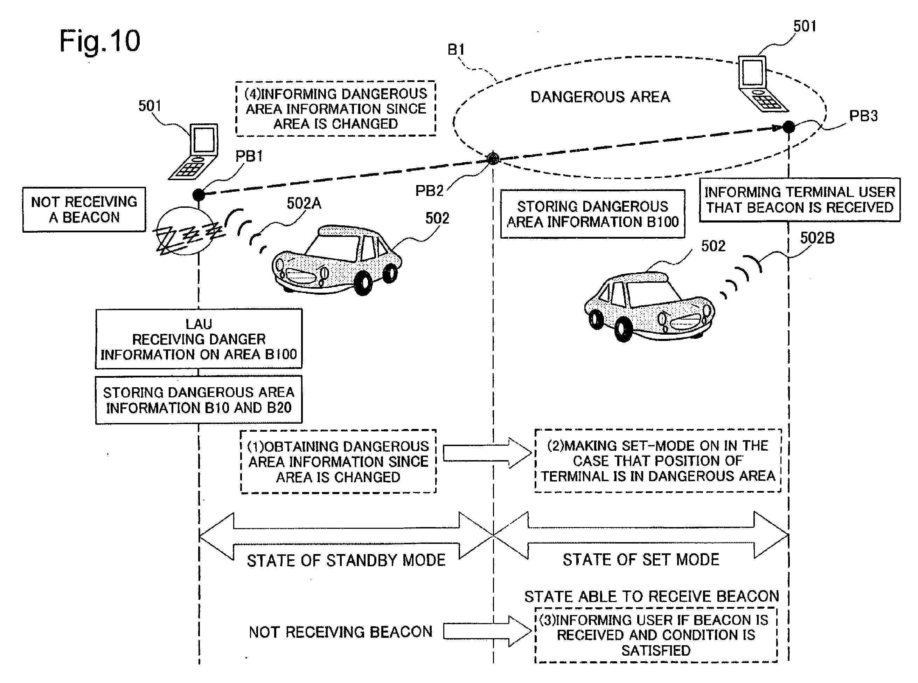

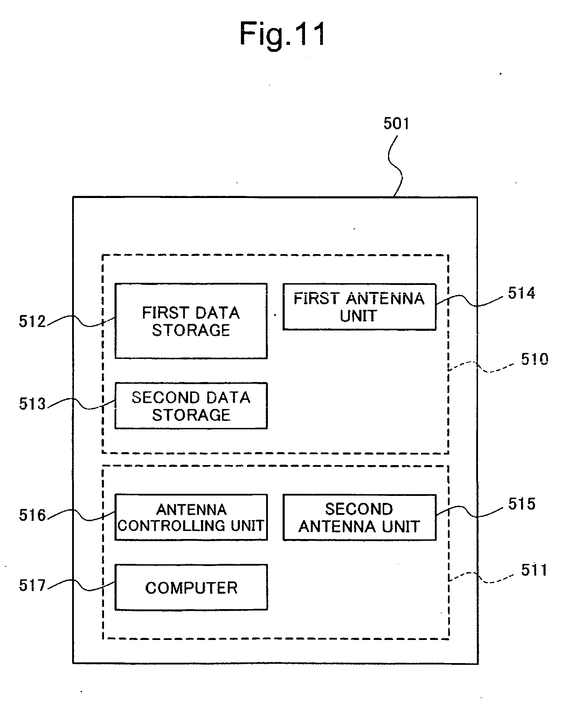

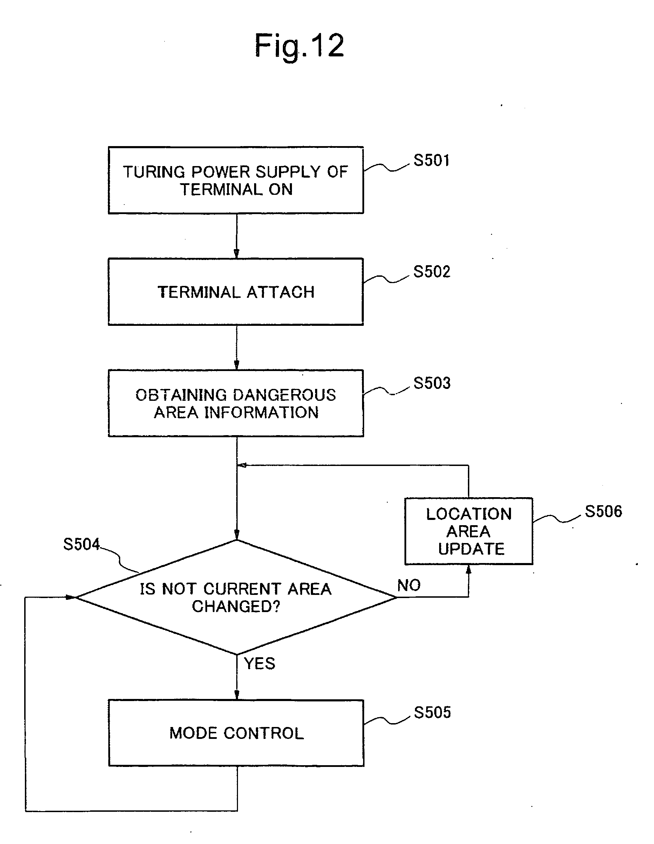

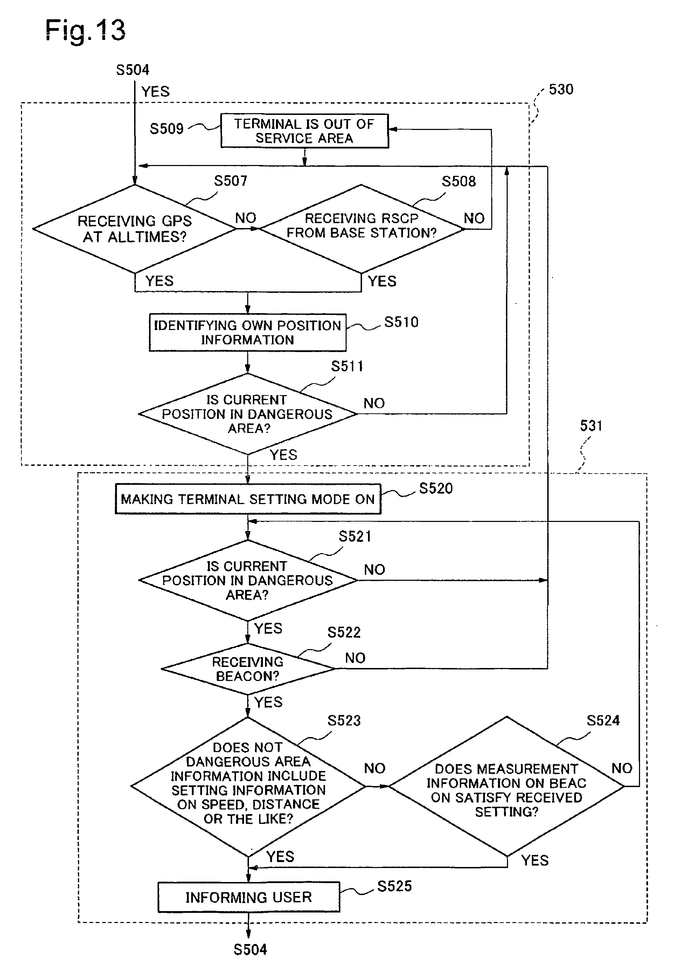

FIG. 9 is an explanatory diagram showing relation among a base station, a communication area and a mobile communication terminal in a warning system according to the fifth exemplary embodiment. FIG. 10 is an explanatory diagram showing a beacon receiving state and an operation of the mobile communication terminal of the warning system. FIG. 11 is a block diagram showing a part of configuration of the mobile communication terminal. FIG. 12 is a flowchart showing an operation of the mobile communication terminal. Moreover, FIG. 13 is a flowchart showing a detailed process carried out in a state of a standby mode of the mobile communication terminal.

A base station A shown in FIG. 9 carries out wireless communication with a mobile communication terminal 501 in a communication area A100, and a base station B carries out wireless communication with the mobile communication terminal 501 in a communication area B100. Then, the base station A sends RSCP (Received Signal Code Power) AA and the base station B sends RSCP BB.

A dangerous area A1 is registered with the communication area A100, and dangerous areas B1 and B2 are registered with the communication area B 100.

When the mobile communication terminal 501 moves into the communication area A100, the base station A sends dangerous area information A10 to the mobile communication terminal 501. When the mobile communication terminal 501 moves into the communication area B100, the base station B sends dangerous area information B10 and B20 to the mobile communication terminal 501.

According to FIG. 9, the mobile communication terminal 501 moves from a point PA to a point PB1 and from the point PB1 to a point PB2 and from the point PB2 to a point PB3 as user moves.

The mobile communication terminal 501 is set to be in the state of the standby mode on paths from the point PA to the point PB1, and from the point PB1 to the point PB2. The mobile communication terminal 501 is set to be in a state of a set mode (state able to receive beacon) on a path from the point PB2 to the point PB3.

Moreover, the point PB1 is corresponding to a point at which the communication area is changed from the communication area A100 to the communication area B100. LAU (Location Area Update) is carried out at the point PB1. Furthermore, the mobile communication terminal 501 receives the dangerous area information B10 and B20 at the point PB1 from the base station B.

As shown in FIG. 10, the mobile communication terminal 501 is set to be in the state of the standby mode on the path from the point PB1 to the point PB2. For this reason, the mobile communication terminal 501 is not in the state able to receive the beacon. As a result, the mobile communication terminal 501 does not receive a beacon 502A from a car 502.

Meanwhile, the mobile communication terminal 501 is set to be in the state of the set mode (state able to receive beacon) on the path from the point PB2 to the point PB3 by a setter which is not shown in the figure. As a result, the mobile communication terminal 501 can receive a beacon 502B from the car 502.

Since the mobile communication terminal 501 is in the state of the set mode (state able to receive beacon) on the path from the point PB2 to the point PB3 as shown in Fig. 10, the mobile communication terminal 501 can receive the beacon 502B from an in-car device of the car 502. When the mobile communication terminal 501 receives the beacon 502B, an informer informs user of receiving the beacon 502B. The informing is carried out by use of any one or any combination of sound (warning sound), light (lighting or blinking of a lamp), indication (indication of a character and a mark) and vibration as described in the second exemplary embodiment.

As shown in FIG. 11, the mobile communication terminal 501 includes a configuration 510 which is used mainly in the state of the standby mode, and a configuration 511 which is used in the state able to receive the beacon.

A first data storage 512 stores surrounding base station information and current position information. A second data storage 513 stores the dangerous area information B10 and B20. A first antenna unit 514 carries out wireless communication with the base station.

A second antenna unit 515 receives the beacon 502B from the in-car device. The beacon 502B is sent according to the communication method of WLAN (Wireless Local Area Network), for example. It may be preferable that the beacon 502B is sent according to Bluetooth (registered trademark) or specific small power radio wave.

An antenna controlling unit 516 processes a signal which is received by the second antenna unit 515.

A computer 517 calculates distance from the car and speed, at which the car approaches, on the basis of the received beacon.

Further, the mobile communication terminal 501 includes a display unit, a key for input such as a numerical key, a voice outputting unit such as a speaker, a voice inputting unit such as a microphone and a control unit which controls a whole of the mobile communication terminal 501. Furthermore, the mobile communication terminal 501 includes the receiver 202, the setter 102A and the informer 103 which are shown in FIG. 3. These components are not shown in FIG. 11.

In the warning system mentioned above, the mobile communication terminal 501 works as shown in FIG. 12 and FIG. 13.

When a power supply is turned on by user in S501 of FIG. 12, the control unit of the mobile communication terminal. 501, which is not shown in the figure, carries out an Attach process in S502. The Attach process is to read an initial setting of the mobile communication terminal 501 and to register the mobile communication terminal 501 with the base station, etc.

Next, the control unit obtains the dangerous area information A10 from the base station A in S503. Then, in S504, the control unit compares a currently registered area with an area where the mobile communication terminal 501 exists currently. In other words, the control unit judges whether the current area of the mobile communication terminal 501 is changed or not (whether base station is changed or not). In the case that the current area of the mobile communication terminal 501 is not changed, that is, in the case that the registered area is coincident with the current area of the mobile communication terminal 501 (YES in S504), the control unit carries out a mode control for setting the mobile communication terminal 501 to be in the standby mode or the set mode (mode able to receive beacon).

On the other hand, in the case that the current area of the mobile communication terminal 501 is changed, that is, in the case that the registered area is not coincident with the current area of the mobile communication terminal 501 (NO in S504), the control unit carries out LAU (Location Area Update) process in S506. The LAU process is to register the mobile communication terminal 501 with the destined base station and to eliminate the old dangerous area information A 10, etc. Then, the operation transits to S503. That is, the control unit obtains the dangerous area information B10 and B20 newly. In the case that the current area is not changed (YES in S504), the operation transits to S505.

FIG. 13 is a flowchart showing detailed process of S505 in FIG. 12. 5507 to S511 indicate an operation 530 in the state of the standby mode, and S520 to S525 indicate an operation 531 in the state of the set mode (state able to receive beacon).

In the case of YES in S504, the control unit judges in S507 as a next step whether it is possible to receive a GPS (Global Positioning System) signal at all times or not. In the case that it is impossible to receive the GPS signal at all times (NO in S507), the control unit carries out a process of receiving RSCP BB from the base station B in S508. In the case that the control unit cannot carry out the RSCP receiving process (NO in S508), the mobile communication terminal 501 is judged to be out of a service area of the base station B (S509), and again, the operation transits to S507. The process of receiving RSCP BB from the base station, which is called assist GPS, is to identify a position of the mobile communication terminal 501 roughly on the basis of received power values of the radio waves from a plurality of base stations. The control unit can also identify the position of the own mobile communication terminal 501 by additional use of RSSI (Received Signal Strength Indicator) in the process. In the case that the control unit can carry out the RSCP receiving process (YES in S508), the operation transits to 5510.

In the case that the control process of S507 or S508 is completed, the control unit can obtain information on the position of the own mobile communication terminal 501 (S510). Next, the control unit judges in S511 whether the own mobile communication terminal 501 exists in the dangerous area.

In the case that the current position is not in the dangerous area B1 (NO in S511), the operation transits to S507. On the other hand, in the case that the current position is in the dangerous area B1 (YES in S511), a setter, which is not shown in the figure, turns the set mode of the own mobile communication terminal 501 on in S520. The set mode, which enables to receive the beacon, is called a mode of the state able to receive the beacon.

The control unit judges again in S521 whether the position of the own mobile communication terminal 501 is in the dangerous area B1. In the case that the control unit compares the current position of the own mobile communication terminal 501 with the position of the dangerous area and consequently, judges that the current position of the own mobile communication terminal 501 is in the dangerous area B1 (YES in S521), the control unit judges in S522 as a next step whether the beacon 502B is received. In the case that the beacon 502B is received (YES in S522), the control unit judges whether a setting on a speed, a distance or the like is embedded in the dangerous area information B20. The setting on the speed, the distance or the like means a setting on a threshold level which is for detecting a speed not slower than a predetermined speed, and a distance not longer than a predetermined distance so as to inform user. For example, in the case that a beacon, which is sent from a car approaching at a speed of not slower than 30km/h, is received, an informer, which is not shown in the figure, informs user of the import.

In the case that the setting on the speed, the distance or the like is not embedded in the dangerous area information B20 (YES in 5523), the control unit informs user in S525 that the car approaches. On the other hand, in the case that the setting on the speed, the distance or the like is embedded in the dangerous area information B20 (NO in 5523), the control unit judges in S524 whether measurement information on the beacon 502B satisfies the received setting. In the case that the measurement information on the beacon 502B does not satisfy the received setting (NO in S524), the operation transits to S520. In the case that the measurement information on the beacon 502B satisfies the received setting (YES in S524), the informer informs user in S525 that the car approaches.

Thus, according to the warning system which works as mentioned above, the mobile communication terminal 501 is set to be in the state able to receive the beacon 502B only when the mobile communication terminal 501 enters into the dangerous area B1. For this reason, only when the car 502 approaches the mobile communication terminal 501 in the dangerous area B1, the approach of the car is informed to user. Therefore, it is possible to provide more accurate information. Consequently, it is possible to prevent to receive the beacon in a little bit dangerous area.

Moreover, in the case that a signal is embedded in the beacon 502B, necessity to inform user is judged on the basis of the signal, according to the warning system. For this reason, it is possible to issue the warning a little bit early in the case that the car 502 approaches fast, and it is possible to issue the warning just before meeting on the road in the case that the car approaches slow. Therefore, a time to inform user can be selected more freely.

Moreover, according to the warning system of the exemplary embodiment, in the case that the mobile communication terminal 501 cannot receive the GPS signal, the position of the mobile communication terminal 501 can be calculated almost correctly by receiving RSCP and/or RSSI from the base station. For this reason, it is possible to judge whether the mobile communication terminal moves into the dangerous area B1 and consequently, it is possible to set the own mobile communication terminal 501 to be in the state able to receive the beacon 502B.

In recent years, a low-noise car has been developed. In the case that such low-noise car approaches, it is difficult to notice the approach of the car and consequently, an accident also occurs due to the situation. However, according to the exemplary embodiment, it is possible to inform user in the dangerous area that the low-noise car approaches by mounting the in-car device, which sends the beacon, in the low-noise car, for example, a hybrid car, an electric car, a fuel cell powered vehicle or the like.

In particular, it is difficult to notice that a car approaches, in the case that user opens an umbrella on a rainy day and the car approaches user from the back. However, even in the case, it is possible to inform user appropriately that the car approaches by using the warning system.

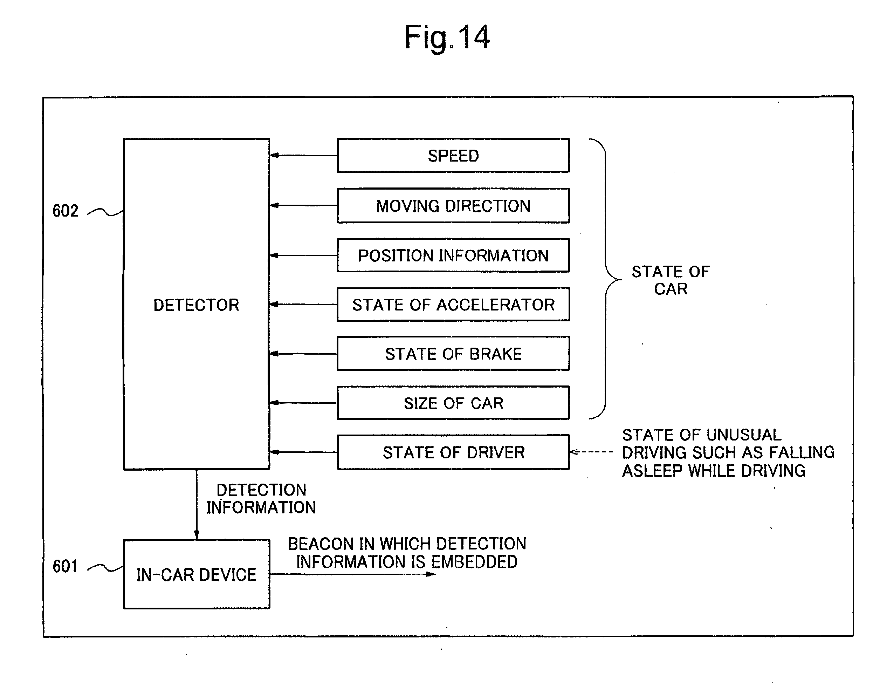

Next, a sixth exemplary embodiment will be described. FIG. 14 is an explanatory diagram showing a beacon which is sent from an in-car device according to the sixth exemplary embodiment.

The sixth exemplary embodiment is characterized in the beacon which is sent from an in-car device 601.

The in-car device 601 sends the beacon in which detection information detected by a detector 602 is embedded. The detector 602 detects a state of a car and/or a state of a driver. The state of the car means any one or a plurality of, for example, a speed, a moving direction, position information, a state of an accelerator, a state of a brake and size of the car.

The speed is provided by a speedometer. The moving direction is provided by a gyro and a GPS receiver which are mounted in the car. The state of the accelerator is provided by a tachometer and a sensor for detecting the state of the accelerator. The state of the brake is extracted on the basis of a presence of lighting a stop-lamp and is provided by a sensor for detecting the state of the brake. The size of the car is extracted on the basis of capacity of a fuel tank and a specific signal of an engine. Moreover, the state of the driver means a state in which the driver is about to fall asleep with the driver's head swaying or a state in which the driver is about to fall asleep with the driver's eyelid closing. The state of the driver is detected on the basis of an image by a camera, which is mounted in the car, so that it is judged whether the driver falls asleep while driving. In the case that an unusual state of driver's eye such as a state in which the driver's eyes moves in disorder or hardly moves is detected, the case means that a state of unusual driving is extracted.

A mobile communication terminal (not shown in the figure), which is used in the sixth exemplary embodiment, includes an analyzer which analyzes the detection information embedded in the beacon. Then, the mobile communication terminal indicates the analyzed information by use of at least one out of a character, a mark and an illustration.

In the case that the mobile communication terminal receives the beacon in which the detection information is embedded, it is possible that user actually feels largeness of the danger. As a result, user can take refuge to a safe place promptly.

Next, a seventh exemplary embodiment will be described.

While the in-car device has been described as the device which is mounted in the car according to the first to sixth exemplary embodiment, it is possible to use an apparatus, which sends the beacon, other than the in-car device mentioned above. The apparatus, which user carries when driving and which is easy to be taken into the car and out from the car, is, for example, a mobile communication terminal, a music player, a portable personal computer and a personal mobile information terminal (PDA: Personal Digital Assistants).

The in-car device which sends the beacon is, for example, a car navigation system and an audio system. The beacon is sent in order to communicate with an external device. If there is no external device with which the in-car device can communicate, the sent beacon becomes useless. However, the useless beacon is used according to the first to the sixth exemplary embodiments of the present invention. For this reason, according to the invention related to the first to the sixth exemplary embodiments, it is unnecessary to mount the in-car device, which sends the beacon, into the car newly.

At this moment, all cars do not always mount the in-car device which sends the beacon. However, it is possible to arrange a device, which sends the beacon, in every car with a relatively cheap cost by use of the device which user can carry and sends the beacon, as described in the seventh exemplary embodiment. As a result, it is possible for the mobile communication terminal to receive the beacon from every car which approaches in the dangerous area.

Moreover, an eighth exemplary embodiment, which is different from the exemplary embodiments mentioned above, will be described in the following. In the case that the mobile communication terminal receives the beacon (predetermined wireless signal), the import that the beacon is received is informed to user, according to the invention which is described in the first to the seventh exemplary embodiments. However, according to the eighth exemplary embodiment, a monitoring apparatus (management computer), which is connected to a base station, warns the mobile communication terminal that a car approaches. For example, in the case that a mobile communication terminal of user on walking is in a state able to receive the beacon, the monitoring apparatus monitors a position of the mobile communication terminal and a position of a surrounding mobile communication terminal respectively. In the case that another mobile communication terminal approaches the user's mobile communication terminal at a speed not slower than a predetermined speed, the monitoring apparatus issues a warning to both of the user's mobile communication terminal and another mobile communication terminal which approaches the user's mobile communication terminal.

That is, the eighth exemplary embodiment includes a monitoring step and a warning step. The monitoring step is for monitoring the user's mobile communication terminal and another mobile communication terminal which exists in a predetermined communication area or in a dangerous area, in the case that the user's mobile communication terminal enters into the state able to receive the beacon. The warning step is for issuing the warning to both of another mobile communication terminal and the user's mobile communication terminal which is in the state able to receive the beacon, in the case that another mobile communication terminal, which approaches to the user' mobile terminal at the speed not slower than the predetermined speed, is detected,.

According to the eighth exemplary embodiment mentioned above, it is possible to issue the warning not only to a mobile communication terminal of a person on walking but also to a mobile communication terminal of a person in a car who carries the mobile communication terminal. For this reason, according to the eighth exemplary embodiment, it is possible to avoid a traffic accident by warning both mobile communication terminals to make both persons pay attention.

While the present invention has been described with reference to the exemplary embodiments thereof, the present invention is not limited to the exemplary embodiments mentioned above. Various changes in form and details, which a person skilled in the art can understand, may be made therein without departing from the scope of the present invention.

This application is based upon and claims the benefit of priority from Japanese Patent Application No. 2008-297699, filed on November 21, 2008.

### AVAILABILITY ON THE INDUSTRY

The mobile communication terminal according to the present invention is applicable to a cellular phone, PHS, PDA or the like which, in the case that the predetermined wireless signal from the base station is received, can inform own user by use of an informer that the predetermined wireless signal is received.

## Claims

1. A mobile communication terminal comprising:
a setter (102, 102A) setting the mobile communication terminal (101, 201, 501) to be in a state able to receive a predetermined wireless signal in the case that the mobile communication terminal moves to a predetermined communication area (104, 105, A100, B100) and receives a specific control signal from a destined base station (106, 203, A, B); and
an informer (103) informing a user of the own mobile communication terminal that the predetermined wireless signal is received in the case that the mobile communication terminal receives the predetermined wireless signal in the state able to receive the predetermined wireless signal,
wherein the predetermined wireless signal is a radio beacon signal (502A, 502B) which is sent from an in-car device by a wireless communication system, such as WLAN, Bluetooth (registered trademark) or specific small power radio wave,
wherein the predetermined wireless signal includes detection information which is provided by a detector detecting a state of a car or a state of a driver, and
the state of the car includes at least one out of a speed, a moving direction, a position information, a state of an accelerator, a state of a brake and size of the car.

2. The mobile communication terminal according to claim 1, **characterized in that**:
the mobile communication terminal further includes a receiver (202) receiving the specific control signal, which indicates a specific area included in the communication area, from the destined base station in the case that the mobile communication terminal moves into the communication area;
and the setter (102, 102A) sets the mobile communication terminal to be in the state able to receive the predetermined wireless signal, when the mobile communication terminal moves into the specific area.

3. The mobile communication terminal according to claim 2, **characterized in that**:
the specific area is a dangerous area; and the specific control signal includes information on the dangerous area.

4. The mobile communication terminal according to any one of claims 1 to 3, **characterized in that**:
the in-car device is mounted in any one out of a hybrid car, an electric car and a fuel cell powered vehicle.

5. The mobile communication terminal according to any one of claims 1 to 4, **characterized in that**:
the in-car device is any one out of a mobile communication terminal, a music player, a portable personal computer and a personal mobile information terminal.

6. The mobile communication terminal according to any one of claims 1 to 5, **characterized by** further comprising:
a position detector detecting a position of the own mobile communication terminal on the basis of RSCP and/or RSSI sent from a plurality of base stations.

7. A base station comprising:
a sender sending a specific control signal which sets a mobile communication terminal to be in a state able to receive a predetermined wireless signal in the case that the mobile communication terminal moves into a predetermined communication area, wherein the predetermined wireless signal is a radio beacon signal (502A, 502B) which is sent from an in-car device by a wireless communication system, such as WLAN, Bluetooth (registered trademark) or specific small power radio wave,
wherein the predetermined wireless signal includes detection information which is provided by a detector detecting a state of a car or a state of a driver, and
the state of the car includes at least one out of a speed, a moving direction, a position information, a state of an accelerator, a state of a brake and size of the car.

8. The base station according to claim 7, **characterized in that**: a dangerous area is registered with the communication area; and the specific control signal includes information on the dangerous area.

9. The base station according to claim 7 or 8, **characterized by** further comprising:
a monitoring apparatus which monitors the mobile communication terminal and another mobile communication terminal existing in the predetermined communication area or in the dangerous area in the case that the mobile communication terminal is in the state able to receive the predetermined wireless signal, and which issues a warning to both of the mobile communication terminal and another mobile communication terminal in the case that another mobile communication terminal which approaches the mobile communication terminal at a speed not slower than a predetermined speed is detected.

10. A warning system comprising:
the mobile communication terminal according to any one of claims 1 to 6; and
the base station according to claims 7, 8 or 9 and which sends the wireless signal to the mobile communication terminal and receives the wireless signal from the mobile communication terminal.

11. A method for controlling a mobile communication terminal, said method comprising the following steps:
(a) detecting that the mobile communication terminal moves into a predetermined communication area;
(b) sending from the base station a specific control signal in the case that it is detected in the detecting step that the mobile communication terminal moves;
and
(c) setting the mobile communication terminal to be in a state able to receive a predetermined wireless signal in the case that the mobile communication terminal receives the specific control signal which is sent in step (b), wherein the predetermined wireless signal is a radio beacon signal (502A, 502B) which is sent from an in-car device by a wireless communication system, such as WLAN, Bluetooth (registered trademark) or specific small power radio wave,
wherein the predetermined wireless signal includes detection information which is provided by a detector detecting a state of a car or a state of a driver, and
the state of the car includes at least one out of a speed, a moving direction, a position information, a state of an accelerator, a state of a brake and size of the car.

12. The method for controlling the mobile communication terminal according to claim 11, **characterized in that**:
a dangerous area is registered as the predetermined communication area; and
step (a) is for detecting that the mobile communication terminal moves into the dangerous area.

13. The method for controlling the mobile communication terminal according to claim 11 or claim 12, **characterized by** comprising the following steps:
(d) monitoring the mobile communication terminal and another mobile communication terminal existing in the predetermined communication area or in the dangerous area in the case that the mobile communication terminal is in the state able to receive the predetermined wireless signal; and
(e) warning both of the mobile communication terminal and another mobile communication terminal, in the case that another mobile communication terminal which approaches the mobile communication terminal at a speed not slower than a predetermined speed is detected.

14. The method for controlling the mobile communication terminal according to any one of claims 11 to 13, **characterized by** further comprising the following step:
(f) informing that the predetermined wireless signal is received in the case that the predetermined wireless signal is received.

## Patentansprüche

1. Mobilkommunikationsendgerät, welches Folgendes aufweist:
eine Einstelleinheit (102, 102A), die das Mobilkommunikationsendgerät (101, 201, 501) in dem Fall, dass sich das Mobilkommunikationsendgerät zu einem vorgegebenen Kommunikationsbereich (104, 105, A100, B100) bewegt und ein spezifisches Steuersignal von einer vorgesehenen Basisstation (106, 203, A, B) empfängt, in einen Zustand versetzt, in dem es in der Lage ist, ein vorgegebenes Drahtlossignal zu empfangen, und
eine Informiereinheit (103), die einen Benutzer des eigenen Mobilkommunikationsendgeräts in dem Fall, dass das Mobilkommunikationsendgerät das vorgegebene Drahtlossignal in dem Zustand empfängt, in dem es in der Lage ist, das vorgegebene Drahtlossignal zu empfangen, informiert, dass das vorgegebene Drahtlossignal empfangen wird,
wobei das vorgegebene Drahtlossignal ein Funkbakensignal (502A, 502B) ist, das von einer Vorrichtung innerhalb eines Autos durch ein Drahtloskommunikationssystem in der Art von WLAN, Bluetooth (eingetragenes Warenzeichen) oder einer spezifischen Funkwelle kleiner Leistung gesendet wird,
wobei das vorgegebene Drahtlossignal Detektionsinformationen aufweist, die durch einen Detektor bereitgestellt werden, der einen Zustand eines Autos oder einen Zustand eines Fahrers erkennt, und
der Zustand des Autos mindestens einen von einer Geschwindigkeit, einer Bewegungsrichtung, einer Positionsinformation, eines Zustands eines Gaspedals, eines Zustands einer Bremse und der Größe des Autos aufweist.

2. Mobilkommunikationsendgerät nach Anspruch 1, **dadurch gekennzeichnet, dass**:
das Mobilkommunikationsendgerät ferner einen Empfänger (202) aufweist, der das spezifische Steuersignal, welches einen spezifischen Bereich angibt, der im Kommunikationsbereich enthalten ist, in dem Fall von der vorgesehenen Basisstation empfängt, dass sich das Mobilkommunikationsendgerät in den Kommunikationsbereich bewegt,
und die Einstelleinheit (102, 102A) das Mobilkommunikationsendgerät in den Zustand versetzt, in dem es in der Lage ist, das vorgegebene Drahtlossignal zu empfangen, wenn sich das Mobilkommunikationsendgerät in den spezifischen Bereich bewegt.

3. Mobilkommunikationsendgerät nach Anspruch 2, **dadurch gekennzeichnet, dass**:
der spezifische Bereich ein gefährlicher Bereich ist und das spezifische Steuersignal Informationen über den gefährlichen Bereich aufweist.

4. Mobilkommunikationsendgerät nach einem der Ansprüche 1 bis 3, **dadurch gekennzeichnet, dass**:
die Vorrichtung innerhalb des Autos in einem von einem Hybridauto, einem Elektroauto und einem durch Brennstoffzellen angetriebenen Fahrzeug montiert ist.

5. Mobilkommunikationsendgerät nach einem der Ansprüche 1 bis 4, **dadurch gekennzeichnet, dass**:
die Vorrichtung innerhalb des Autos eine beliebige von einem Mobilkommunikationsendgerät, einem Musikabspielgerät, einem tragbaren Personalcomputer und einem persönlichen mobilen Informationsendgerät ist.

6. Mobilkommunikationsendgerät nach einem der Ansprüche 1 bis 5, **dadurch gekennzeichnet, dass** es ferner aufweist:
einen Positionsdetektor, der eine Position des eigenen Mobilkommunikationsendgeräts auf der Grundlage von RSCP und/oder RSSI, welche von mehreren Basisstationen gesendet werden, erkennt.

7. Basisstation, welche Folgendes aufweist:
einen Sender, der in dem Fall, dass sich das Mobilkommunikationsendgerät in einen vorgegebenen Kommunikationsbereich bewegt, ein spezifisches Steuersignal sendet, das ein Mobilkommunikationsendgerät in einen Zustand versetzt, in dem es in der Lage ist, ein vorgegebenes Drahtlossignal zu empfangen, wobei das vorgegebene Drahtlossignal ein Funkbakensignal (502A, 502B) ist, das von einer Vorrichtung innerhalb eines Autos durch ein Drahtloskommunikationssystem in der Art von WLAN, Bluetooth (eingetragenes Warenzeichen) oder einer spezifischen Funkwelle kleiner Leistung gesendet wird,
wobei das vorgegebene Drahtlossignal Detektionsinformationen aufweist, die durch einen Detektor bereitgestellt werden, der einen Zustand eines Autos oder einen Zustand eines Fahrers erkennt, und
der Zustand des Autos mindestens einen von einer Geschwindigkeit, einer Bewegungsrichtung, einer Positionsinformation, eines Zustands eines Gaspedals, eines Zustands einer Bremse und der Größe des Autos aufweist.

8. Basisstation nach Anspruch 7, **dadurch gekennzeichnet, dass**: ein gefährlicher Bereich mit dem Kommunikationsbereich registriert ist und das spezifische Steuersignal Informationen über den gefährlichen Bereich aufweist.

9. Basisstation nach Anspruch 7 oder 8, **dadurch gekennzeichnet, dass** sie ferner Folgendes aufweist:
eine Überwachungsvorrichtung, welche das Mobilkommunikationsendgerät und ein anderes Mobilkommunikationsendgerät, das im vorgegebenen Kommunikationsbereich oder im gefährlichen Bereich existiert, in dem Fall überwacht, dass das Mobilkommunikationsendgerät in dem Zustand ist, in dem es das vorgegebene Drahtlossignal empfangen kann, und welche in dem Fall, dass ein anderes Mobilkommunikationsendgerät, das sich dem Mobilkommunikationsendgerät mit einer Geschwindigkeit nähert, die nicht langsamer als eine vorgegebene Geschwindigkeit ist, erkannt wird, eine Warnung sowohl an das Mobilkommunikationsendgerät als auch das andere Mobilkommunikationsendgerät ausgibt.

10. Warnsystem, welches Folgendes aufweist:
das Mobilkommunikationsendgerät nach einem der Ansprüche 1 bis 6 und
die Basisstation nach Anspruch 7, 8 oder 9, welche das Drahtlossignal zum Mobilkommunikationsendgerät sendet und das Drahtlossignal vom Mobilkommunikationsendgerät empfängt.

11. Verfahren zum Steuern eines Mobilkommunikationsendgeräts, wobei das Verfahren die folgenden Schritte aufweist:
(a) Erkennen, dass sich das Mobilkommunikationsendgerät in einen vorgegebenen Kommunikationsbereich bewegt,
(b) Senden eines spezifischen Steuersignals von der Basisstation in dem Fall, dass im Erkennungsschritt erkannt wird, dass sich das Mobilkommunikationsendgerät bewegt, und
(c) Versetzen des Mobilkommunikationsendgeräts in einen Zustand, in dem es in der Lage ist, ein vorgegebenes Drahtlossignal zu empfangen, in dem Fall, dass das Mobilkommunikationsendgerät das in Schritt (b) gesendete spezifische Steuersignal empfängt, wobei das vorgegebene Drahtlossignal ein Funkbakensignal (502A, 502B) ist, das von einer Vorrichtung innerhalb eines Autos durch ein Drahtloskommunikationssystem in der Art von WLAN, Bluetooth (eingetragenes Warenzeichen) oder einer spezifischen Funkwelle kleiner Leistung gesendet wird,
wobei das vorgegebene Drahtlossignal Detektionsinformationen aufweist, die durch einen Detektor bereitgestellt werden, der einen Zustand eines Autos oder einen Zustand eines Fahrers erkennt, und
der Zustand des Autos mindestens einen von einer Geschwindigkeit, einer Bewegungsrichtung, einer Positionsinformation, eines Zustands eines Gaspedals, eines Zustands einer Bremse und der Größe des Autos aufweist.

12. Verfahren zum Steuern des Mobilkommunikationsendgeräts nach Anspruch 11, **dadurch gekennzeichnet, dass**:
ein gefährlicher Bereich als der vorgegebene Kommunikationsbereich registriert wird und
Schritt (a) dem Erkennen dient, dass sich das Mobilkommunikationsendgerät in den gefährlichen Bereich bewegt.

13. Verfahren zum Steuern des Mobilkommunikationsendgeräts nach Anspruch 11 oder 12, **dadurch gekennzeichnet, dass** es die folgenden Schritte aufweist:
(d) Überwachen des Mobilkommunikationsendgeräts und eines anderen Mobilkommunikationsendgeräts, das im vorgegebenen Kommunikationsbereich oder im gefährlichen Bereich existiert, in dem Fall, dass sich das Mobilkommunikationsendgerät in dem Zustand befindet, in dem es in der Lage ist, das vorgegebene Drahtlossignal zu empfangen, und
(e) Warnen sowohl des Mobilkommunikationsendgeräts als auch eines anderen Mobilkommunikationsendgeräts in dem Fall, dass ein anderes Mobilkommunikationsendgerät, das sich dem Mobilkommunikationsendgerät mit einer Geschwindigkeit nähert, die nicht langsamer als eine vorgegebene Geschwindigkeit ist, erkannt wird.

14. Verfahren zum Steuern des Mobilkommunikationsendgeräts nach einem der Ansprüche 11 bis 13, **dadurch gekennzeichnet, dass** es ferner den folgenden Schritt aufweist:
(f) Informieren, dass das vorgegebene Drahtlossignal empfangen wird, in dem Fall, dass das vorgegebene Drahtlossignal empfangen wird.

## Revendications

1. Terminal de communication mobile, comprenant :
un module de réglage (102, 102A) réglant le terminal de communication mobile (101, 201, 501) afin qu'il soit dans un état apte à recevoir un signal sans fil prédéterminé dans le cas où le terminal de communication mobile se déplace vers une zone de communication prédéterminée (104, 105, A100, B100) et reçoit un signal de commande spécifique en provenance d'une station de base de destination (106, 203, A, B) ;
et
un module d'information (103) informant un utilisateur dudit terminal de communication mobile que le signal sans fil prédéterminé est reçu, dans le cas où le terminal de communication mobile reçoit le signal sans fil prédéterminé dans l'état apte à recevoir le signal sans fil prédéterminé ;
dans lequel le signal sans fil prédéterminé est un signal de radiobalise (502A, 502B) qui est envoyé à partir d'un dispositif embarqué par un système de communication sans fil, par exemple un réseau WLAN, un système utilisant la technologie Bluetooth (marque déposée) ou une onde radio de faible puissance spécifique,
dans lequel le signal sans fil prédéterminé inclut des informations de détection qui sont fournies par un détecteur détectant un état d'une automobile ou un état d'un conducteur ; et
l'état de l'automobile inclut au moins un état parmi une vitesse, une direction de déplacement, une information de positionnement, un état d'un accélérateur, un état d'un frein, et la taille de l'automobile.

2. Terminal de communication mobile selon la revendication 1, **caractérisé en ce que** :
le terminal de communication mobile inclut en outre un récepteur (202) recevant le signal de commande spécifique, lequel indique une zone spécifique incluse dans la zone de communication, en provenance de la station de base de destination, dans le cas où le terminal de communication mobile se déplace au sein de la zone de communication ; et
le module de réglage (102, 102A) règle le terminal de communication mobile afin qu'il soit dans l'état apte à recevoir le signal sans fil prédéterminé, lorsque le terminal de communication mobile se déplace au sein de la zone spécifique.

3. Terminal de communication mobile selon la revendication 2, **caractérisé en ce que** :
la zone spécifique est une zone dangereuse et le signal de commande spécifique inclut des informations sur la zone dangereuse.

4. Terminal de communication mobile selon l'une quelconque des revendications 1 à 3, **caractérisé en ce que** :
le dispositif embarqué est monté dans l'une quelconque parmi une automobile hybride, une automobile électrique et un véhicule alimenté par piles à combustible.

5. Terminal de communication mobile selon l'une quelconque des revendications 1 à 4, **caractérisé en ce que** :
le dispositif embarqué est l'un quelconque parmi un terminal de communication mobile, un lecteur de musique, un ordinateur personnel portable et un terminal informatique mobile personnel.

6. Terminal de communication mobile selon l'une quelconque des revendications 1 à 5, **caractérisé en ce qu'**il comprend en outre :
un détecteur de position détectant une position dudit terminal de communication mobile sur la base de la puissance RSCP et/ou d'un indicateur RSSI envoyé à partir d'une pluralité de stations de base.

7. Station de base, comprenant :
un émetteur envoyant un signal de commande spécifique qui règle un terminal de communication mobile afin qu'il soit dans un état apte à recevoir un signal sans fil prédéterminé, dans le cas où le terminal de communication mobile se déplace dans une zone de communication prédéterminée, dans lequel le signal sans fil prédéterminé est un signal de radiobalise (502A, 502B) qui est envoyé à partir d'un dispositif embarqué par un système de communication sans fil, par exemple un réseau WLAN, un système utilisant la technologie Bluetooth (marque déposée) ou une onde radio de faible puissance spécifique,
dans lequel le signal sans fil prédéterminé inclut des informations de détection qui sont fournies par un détecteur détectant un état d'une automobile ou un état d'un conducteur ; et
l'état de l'automobile inclut au moins un état parmi une vitesse, une direction de déplacement, une information de positionnement, un état d'un accélérateur, un état d'un frein, et la taille de l'automobile.

8. Station de base selon la revendication 7, **caractérisée en ce que** : une zone dangereuse est enregistrée avec la zone de communication, et le signal de commande spécifique inclut des informations sur la zone dangereuse.

9. Station de base selon la revendication 7 ou 8, **caractérisée en ce qu'**elle comporte en outre :
un appareil de surveillance qui surveille le terminal de communication mobile et un autre terminal de communication mobile existant dans la zone de communication prédéterminée ou dans la zone dangereuse, dans le cas où le terminal de communication mobile est dans l'état apte à recevoir le signal sans fil prédéterminé, et qui émet un avertissement à la fois à destination du terminal de communication mobile et de l'autre terminal de communication mobile, dans le cas où est détecté un autre terminal de communication mobile qui se rapproche du terminal de communication mobile à une vitesse non inférieure à une vitesse prédéterminée.

10. Système d'avertissement, comprenant :
le terminal de communication mobile selon l'une quelconque des revendications 1 à 6 ; et
la station de base selon les revendications 7, 8 ou 9, laquelle envoie le signal sans fil au terminal de communication mobile et reçoit le signal sans fil en provenance du terminal de communication mobile.

11. Procédé de commande d'un terminal de communication mobile, ledit procédé comprenant les étapes ci-dessous consistant à :
(a) détecter que le terminal de communication mobile se déplace dans une zone de communication prédéterminée ;
(b) envoyer, à partir de la station de base, un signal de commande spécifique, dans le cas où il est détecté, à l'étape de détection, que le terminal de communication mobile se déplace ; et
(c) régler le terminal de communication mobile afin qu'il soit dans un état apte à recevoir un signal sans fil prédéterminé, dans le cas où le terminal de communication mobile reçoit le signal de commande spécifique qui est envoyé à l'étape (b), dans lequel le signal sans fil prédéterminé est un signal de radiobalise (502A, 502B) qui est envoyé à partir d'un dispositif embarqué par un système de communication sans fil, par exemple un réseau WLAN, un système utilisant la technologie Bluetooth (marque déposée) ou une onde radio de faible puissance spécifique,
dans lequel le signal sans fil prédéterminé inclut des informations de détection qui sont fournies par un détecteur détectant un état d'une automobile ou un état d'un conducteur ; et
l'état de l'automobile inclut au moins un état parmi une vitesse, une direction de déplacement, une information de positionnement, un état d'un accélérateur, un état d'un frein, et la taille de l'automobile.

12. Procédé de commande du terminal de communication mobile selon la revendication 11, **caractérisé en ce que** :
une zone dangereuse est enregistrée en tant que la zone de communication prédéterminée ; et
l'étape (a) consiste à détecter que le terminal de communication mobile se déplace au sein de la zone dangereuse.

13. Procédé de commande du terminal de communication mobile selon la revendication 11 ou 12, **caractérisé en ce qu'**il comprend les étapes ci-dessous consistant à :
(d) surveiller le terminal de communication mobile et un autre terminal de communication mobile existant dans la zone de communication prédéterminée ou dans la zone dangereuse, dans le cas où le terminal de communication mobile est dans l'état apte à recevoir le signal sans fil prédéterminé ; et
(e) avertir à la fois le terminal de communication mobile et l'autre terminal de communication mobile, dans le cas où est détecté un autre terminal de communication mobile qui se rapproche du terminal de communication mobile à une vitesse non inférieure à une vitesse prédéterminée.

14. Procédé de commande du terminal de communication mobile selon l'une quelconque des revendications 11 à 13, **caractérisé en ce qu'**il comprend en outre l'étape ci-dessous consistant à :
(f) signaler que le signal sans fil prédéterminé est reçu, dans le cas où le signal sans fil prédéterminé est reçu.
